# FASCICULE DE BREVET EUROPEEN

(11) **EP 2 542 924 B1**
(45) Date de publication et mention de la délivrance du brevet: **24.06.2015**
(21) Numéro de dépôt: 11714347.9
(22) Date de dépôt: 04.03.2011
(51) Int. Cl.: G02B 1/04, B29D 11/00

(54) **NOUVEAU MATÉRIAU COMPOSITE À USAGE OPTIQUE AINSI QUE SON PROCÉDÉ D'OBTENTION**
NEUES VERBUNDMATERIAL ZUR OPTISCHEN VERWENDUNG UND VERFAHREN ZU SEINER GEWINNUNG
NOVEL COMPOSITE MATERIAL FOR OPTICAL USE AND METHOD FOR OBTAINING SAME

(30) Priorité: 04.03.2010 FR 1000875
(43) Date de publication de la demande: 09.01.2013
(73) Titulaire: Christian Dalloz Sunoptics, 39206 Saint-Claude Cedex (FR)
(72) Inventeur: MONTALBANO, Franck, F-01100 Veyziat (FR)
(74) Mandataire: Gallochat, Alain
(86) Numéro de dépôt international: PCT/FR2011/000118
(87) Numéro de publication internationale: WO 2011/107678

(56) Documents cités:
- EP-A1- 1 162 245
- WO-A1-2009/138592
- US-A1- 2003 182 738
- US-A1- 2006 056 022
- US-A1- 2006 287 484
- US-B1- 6 333 821

## Description

La présente invention concerne un nouveau matériau composite à usage optique ainsi que son procédé d'obtention.

Dans le domaine des verres solaires réalisés en matériau organique, l'un des procédés de transformation le plus répandu consiste à injecter sous pression élevée des substrats de la famille des polymères thermoplastiques. Historiquement de nombreux matériaux organiques appartenant à cette famille des polymères thermoplastiques ont été utilisés pour fabriquer des pièces optiques, et notamment des verres solaires : polyméthacrylate de méthyle (PMMA) communément appelé « Plexiglass », Propionate de Cellulose (CP), Acétobutyrate (CAB).

Dans le segment des verres pour lunettes solaires haut de gamme, le verre minéral est resté longtemps le matériau de référence, jusqu'à l'apparition des premiers verres organiques thermodurcissables, substrats obtenus par (co)polymérisation du bis allyl carbonate de diéthylèneglycol, vendus, par exemple, sous la dénomination commerciale CR-39^{®} par la société PPG Industries. Plus récemment les fabricants de lunettes solaires haut de gamme ont souhaité utiliser des substrats moins lourds et moins fragiles que le verre minéral, mais également plus résistants au choc et à l'impact à grande vitesse que le CR-39^{®}.

Cette demande a été satisfaite avec la mise au point du procédé de l'injection de matériau thermoplastique pour les applications à usage optique. Tout d'abord et à partir des années 1970, la société Christian Dalloz propose au marché de l'optique lunetterie à usage de la protection individuelle et solaire, les verres Cridalon^{®}, fabriqués à partir de polycarbonate (PC). Une vingtaine d'année plus tard, un autre matériau thermoplastique fait son apparition : homo- et co-polyamide amorphe, communément appelé polyamide.

Chacun de ces deux polymères organiques thermoplastiques, qui se sont progressivement substitué aux matériaux traditionnels (verre minéral et organique thermodurcissable), présentent des avantages et des inconvénients.

Le polycarbonate s'injecte facilement dans tout type de formes (oculaires ou écrans) et présente une très bonne résistance à l'impact. Cependant, il ne peut pas être utilisé dans toutes les montures car il est très sensible au stress-cracking, phénomène dû à des contraintes internes et externes localisées qui créent des zones de moindre résistance. Par ailleurs, le polycarbonate n'est pas compatible avec l'acétate de cellulose, qui est largement utilisé pour fabriquer des montures dans le domaine de la mode et du luxe.

Le polyamide présente l'avantage d'être insensible au stress-cracking et d'être compatible avec l'acétate. Cependant, il est deux fois moins résistant à l'impact que le polycarbonate et il est plus difficile à transformer. D'un point de vue financier, le polyamide est beaucoup plus cher que le polycarbonate et nécessite des installations spécifiques pour être transformé.

La demande de brevet européen EP 1 162 245 décrit un élément d'optique comportant un substrat, une couche de primaire d'accrochage réalisée en polyuréthane et une couche de vernis anti-rayures silicone, mais le substrat utilisé ne répond pas aux objectifs de la demanderesse.

La présente invention concerne un autre polymère que le polycarbonate ou le polyamide, à savoir un matériau thermoplastique de la famille des copolyesters cycloaliphatiques obtenus à partir de la polycondensation de deux alcools et d'un acide, où les alcools et l'acide sont aliphatiques. Le brevet US 6 333 821 décrit un certain nombre de ces copolyesters cycloaliphatiques, mais ces derniers présentent l'inconvénient d'avoir une température de transition vitreuse élevée (supérieure à 180 °C). En outre, et compte tenu de la méthode d'obtention de ces copolyesters telle que décrite dans le brevet US 6 333 821, les copolyesters concernés ne sont pas des matériaux thermoplastiques, alors que c'est ce type de matériau qui est recherché par la demanderesse.

Il a donc été nécessaire de chercher un autre copolyester cycloaliphatique, thermoplastique, ayant une température de transition vitreuse sensiblement plus basse, ce qui est le cas d'un copolyester développé par la firme Eastman Chemical Company sous la marque « Tritan ». Ce nouveau matériau présente les avantages du polyamide, combinés à une facilité de mise en oeuvre proche du polycarbonate, et avec une température de transition vitreuse de l'ordre de 115°C.

Toutefois, ce copolyester ne peut à lui seul être utilisé pour la fabrication de verres solaires ou autres verres à usage optique.

La présente invention concerne donc un matériau composite selon la revendication 1 à base de copolyester traité de façon à le rendre propre à la fabrication de verres solaires ou autres verres à usage optique.

La présente invention concerne également un procédé d'obtention du matériau composite à base de copolyester, du type de celui commercialisé sous la marque « Tritan ».

Il est en effet apparu que ce copolyester lorsqu'il était utilisé seul n'était pas un matériau anti-rayure par nature, ce qui est inadmissible pour l'application « verres solaires haut de gamme » ; il a donc été nécessaire de le revêtir d'une couche de vernis anti-rayuré. A cet égard, les vernis anti-rayure de la famille des polysiloxanes sont les plus communément utilisés dans le domaine des verres solaires et ne posent pas de problème particulier quant à leur application.

Or, de façon tout à fait surprenante, bon nombre de vernis anti-rayure de la famille des polysiloxanes ont été testés, mais ne convenaient pas lorsqu'ils étaient appliqués sur un substrat en copolyester car ils n'adhéraient pas audit substrat.

Parmi ces vernis anti-rayure de la famille des polysiloxanes, on peut ainsi citer deux vernis très communément utilisés.

Le premier de ces vernis qui a été essayé est un vernis silicone présentant des groupements CH aliphatiques et une forte teneur en groupements méthyles d'une chaîne polydiméthylsiloxane.

Les préconisations du fabricant de ce vernis quant à son application sur polycarbonate sont les suivantes :
- T°C du bain : 20°C
- Epaisseur : de 3 à 5 microns
- Séchage: 30 mn à 20°C (gélification)
- Cuisson : 1h40 à 123°C

Ce vernis a été testé sur le substrat en copolyester avec différents paramétrages d'épaisseur, de temps de cuisson et de température de cuisson, mais, contrairement aux attentes, n'a présenté aucune adhérence. L'utilisation d'un primaire d'accrochage n'est pas préconisée pour ce vernis.

En ce qui concerne le deuxième vernis qui a été essayé, c'est également un vernis silicone présentant des groupements hydroxylés, des groupements CH aliphatiques, des groupements esters et des groupements siloxanes avec des groupements méthyles en plus faible teneur que le précédent.

Les préconisations du fabricant de ce vernis quant à son application sur polycarbonate sont les suivantes :
- T°C du bain : 20°C
- Epaisseur : de 3 à 5 microns
- Séchage : 30 mn à 20°C (gélification)
- Cuisson : 1h40 à 123°C

De même que précédemment, ce vernis a été testé sur le substrat en copolyester avec différents paramétrages d'épaisseur, de temps de cuisson et de température de cuisson, mais, là encore contrairement aux attentes, n'a présenté aucune adhérence. L'utilisation d'un primaire d'accrochage n'est pas préconisée pour ce vernis.

Dans l'un et l'autre cas de non adhérence, aucune explication scientifique n'a pu être trouvée.

Devant ces échecs répétés, il a été décidé de recourir à un autre vernis anti-rayure de la famille des polysiloxanes ; en l'occurrence, il a été fait appel à un vernis silicone présentant des groupements hydroxylés, des groupements CH aliphatiques, des groupements esters et des groupements siloxanes sans groupements méthyles.

Les préconisations du fabricant de ce vernis quant à son application sur polycarbonate sont les suivantes :
- T°C du bain : 20°C
- Epaisseur : de 3 à 5 microns
- Séchage : 30 mn à 20°C (gélification)
- Cuisson : 3h à 129°C

Le fabricant de ce vernis préconise un primaire d'accrochage; c'est un primaire polyuréthane comportant des additifs.

S'agissant des préconisations du fabricant pour l'application de ce primaire d'accrochage, elles sont les suivantes :
- T°C du bain : 19°C
- Epaisseur : 1 micron
- Séchage: 10 mn à 50-70°C (gélification)
- Cuisson : pas de cuisson

L'utilisation du dernier vernis cité, utilisé avec son primaire d'accrochage sur le substrat en « Tritan » dans les conditions préconisées par le fabricant, a conduit à une bonne adhérence du vernis mais à une déformation des pièces car le copolyester a une température de transition vitreuse se situant aux environs de 115°C.

De nouvelles recherches ont donc été nécessaires pour avoir à la fois une bonne adhérence et l'absence de déformation des pièces en copolyester lors de l'opération de cuisson du vernis. Après de nombreux essais, il a finalement été trouvé que la plage de température de cuisson était étonnamment étroite ; en effet, une cuisson aux environs de 130 °C comme préconisé par le fabricant déforme les pièces, alors qu'une température plus faible, de l'ordre de 90-95°C par exemple, ne donnait pas lieu à déformation des pièces, mais ne permettait pas d'avoir une adhérence correcte du vernis anti-rayure sur le substrat en copolyester. La température de cuisson finalement retenue se situe entre 100 et 110°C et avantageusement aux environs de 105°C.

Différentes techniques peuvent être utilisées pour appliquer le vernis décrit ci-dessus sur les verres comprenant le substrat et le primaire d'accrochage, à savoir :
- le « dip coating » : les verres sont trempés dans un bain de vernis ;
- le « flow-coating » : les verres reçoivent un jet de vernis qui s'écoule par gravité sur toute la surface ;
- le « spray coating » : les verres reçoivent du vernis par spray ;
- le « spin coating » : les verres reçoivent une goutte de vernis qui s'étend sur toute la surface par rotation du verre sur lui-même.

Le nouveau matériau composite selon la présente invention peut rester incolore ou bien être teinté ; la teinture pourra se faire soit par ajout de pigments colorés, notamment lors de l'injection ou par trempage dans un bain coloré.

Il est à noter également que le vernis utilisé dans le matériau composite selon la présente invention est compatible avec différents traitements de surface sous vide, qu'il s'agisse de traitements colorés à but cosmétique, ou bien de traitements fonctionnels à but antireflet par exemple, ou bien encore de traitements spéciaux tels que le dépôt de métaux précieux, en particulier l'or.

Enfin, dans la présente description, il a été fait référence au copolyester dénommé « Tritan » pour constituer le substrat du matériau composite selon la présente invention. Il est bien entendu que, sans pour autant sortir du cadre de la présente invention, d'autres copolyesters thermoplastiques, c'est-à-dire présentant des caractéristiques physiques et/ou chimiques similaires à celles du « Tritan », mais ayant une température de transition vitreuse plus élevée tout en restant dans le domaine des matières thermoplastiques, pourraient être utilisés comme substrat dudit matériau composite. Dans l'hypothèse où la température de transition vitreuse du copolyester thermoplastique serait plus élevée que celle du Tritan, le procédé d'obtention du matériau composite serait légèrement modifié en adoptant une température de cuisson du vernis légèrement inférieure à la température de transition vitreuse du copolyester thermoplastique utilisé.

Diverses pièces d'optique peuvent être réalisées à partir du matériau composite selon la présente invention, qu'il s'agisse de verres de lunettes, notamment solaires ou de visières de masques ou de casques.

## Revendications

1. Matériau composite à usage optique du type comprenant un substrat, une couche de primaire d'accrochage en polyuréthane et un vernis anti-rayure silicone **caractérisé en ce que** ledit substrat est un copolyester à base de téréphtalate de diméthyle, de 2,2,4,4 tétraméthyl 1-1,3-cyclobutanediol et de 1,4 cyclohexanediméthanol et **en ce que** ledit vernis silicone présente des groupements hydroxylés, des groupements CH aliphatiques, des groupements esters et des groupements siloxanes sans groupements méthyles.

2. Matériau composite selon la revendication 1 **caractérisé en ce qu'**il est teinté.

3. Matériau composite selon l'une des revendications 1 ou 2 **caractérisé en ce qu'**il a en outre subi un traitement de surface sous vide.

4. Procédé d'obtention du matériau composite selon la revendication 1 **caractérisé en ce qu'**il consiste :
a. à appliquer sur le substrat en copolyester un primaire d'accrochage en polyuréthane ;
b. à déposer sur ledit primaire un film de vernis anti-rayure silicone ;
c. à effectuer la cuisson dudit vernis à une température intérieure à la température de transition vitreuse dudit copolyester.

5. Procédé d'obtention du matériau composite selon la revendication 4 **caractérisé en ce que** la cuisson dudit vernis est réalisée entre 100 et 110°C.

6. Procédé selon la revendication 5 **caractérisé en ce que** ladite température de cuisson se situe aux environs de 105°C.

7. Procédé selon l'une quelconque des revendications 4 à 6 **caractérisé en ce que** ledit vernis est appliqué sur le primaire d'accrochage, lui-même disposé sur le substrat, selon l'une des techniques suivantes : « dip coating », « flow coating », « spray coating », « spin coating ».

8. Pièces d'optique réalisées avec le matériau selon l'une quelconque des revendications 1 à 3.

## Patentansprüche

1. Verbundmaterial zur optischen Verwendung des Typs, das ein Substrat, eine primäre Haftschicht aus Polyurethan und einen kratzfesten Silikonlack umfasst, **dadurch gekennzeichnet, dass** das Substrat ein Copolyester auf der Basis von Dimethylterephtalat, von 2,2,4,4-Tetramethyl-1-1,3-cyclobutandiol und von 1,4-Cyclohexanedimethanol ist und dass der Silikonlack hydroxylierte Gruppen, aliphatische CH-Gruppen, Estergruppen und Siloxangruppen ohne Methylgruppen aufweist.

2. Verbundmaterial nach Anspruch 1, **dadurch gekennzeichnet, dass** es gefärbt ist.

3. Verbundmaterial nach einem der Ansprüche 1 oder 2, **dadurch gekennzeichnet, dass** es ferner eine Vakuum-Oberflächenbehandlung erhalten hat.

4. Herstellungsverfahren eines Verbundmaterials nach Anspruch 1, **dadurch gekennzeichnet, dass** es darin besteht:
a. Auftragen einer primären Haftschicht aus Polyurethan auf das Substrat aus Copolyester,
b. Aufbringen eines kratzfesten Silikonlackfilms auf die Primärschicht,
c. Durchführen des Brennens des Lacks bei einer Temperatur unter der Glasumwandlungstemperatur des Copolyesters.

5. Herstellungsverfahren des Verbundmaterials nach Ansprüch 4, **dadurch gekennzeichnet, dass** das Brennen des Lacks zwischen 100 und 110 °C durchgeführt wird.

6. Verfahren nach Anspruch 5, **dadurch gekennzeichnet, dass** die Brenntemperatur zirka 105 °C beträgt.

7. Verfahren nach einem der Ansprüche 4 bis 6, **dadurch gekennzeichnet, dass** der Lack auf die primäre Haftschicht aufgetragen wird, die selbst auf dem Substrat nach einer der folgenden Techniken "dip coating", "flow coating", "spray coating", "spin coating" aufgebracht ist.

8. Optische Teile, die mit dem Material nach einem der Ansprüche 1 bis 3 angefertigt sind.

## Claims

1. A composite material for optical use of the type comprising a substrate, a primary adhesion layer in polyurethane and an anti-scratch silicone varnish **characterized in that** said substrate is a copolyester based on dimethyl terephthalate, 2,2,4,4 tetramethyl 1-1,3-cyclobutanediol and 1,4-cyclohexanedimethanol and **in that** said silicone varnish has hydroxyl groups, aliphatic CH groups, ester groups and siloxane groups without any methyl groups.

2. The composite material according to claim 1, **characterized in that** it is tinted.

3. The composite material according to one of claims 1 or 2, **characterized in that** it has further been subject to a vacuum surface treatment.

4. A method for obtaining the composite material according to claim 1, **characterized in that** it consists of:
a. applying on the copolyester substrate a primary adhesion layer in polyurethane;
b. depositing on said primary layer a film of anti-scratch silicone varnish;
c. carrying out the baking of said varnish at a temperature below the glassy transition temperature of said copolyester.

5. The method for obtaining the composite material according to claim 4, **characterized in that** the baking of said varnish is carried out between 100 and 110°C.

6. The method according to claim 5, **characterized in that** said baking temperature is located around 105°C.

7. The method according to any of claims 4 to 6, **characterized in that** said varnish is applied on the primary adhesion layer, itself positioned on the substrate, according to one of the following techniques: « dip coating », « flow coating », « spray coating », « spin coating ».

8. Optical parts made with the material according to any of claims 1 to 3.
